(19) Europäisches Patentamt
European Patent Office
Office européen des brevets

(11) Publication number: 0 257 848 A2

(12) # EUROPEAN PATENT APPLICATION

(21) Application number: 87306866.2

(22) Date of filing: 03.08.87

(51) Int. Cl.4: C07C 125/065, C08G 18/38, C08G 65/34

(30) Priority: 14.08.86 US 896260

(43) Date of publication of application: 02.03.88 Bulletin 88/09

(84) Designated Contracting States: AT BE DE ES FR GB GR IT NL SE

(71) Applicant: KING INDUSTRIES, INC.
Science Road
Norwalk Connecticut 06852(US)

(72) Inventor: Blank, Werner Josef
89 Spectacle Lane
Wilton Fairfield Connecticut(US)

(74) Representative: Allam, Peter Clerk et al
LLOYD WISE, TREGEAR & CO. Norman House 105-109 Strand
London WC2R 0AE(GB)

(54) **Certain carbamates, processes for preparing same and use thereof.**

(57) This invention relates to certain alkanolamine hydroxylalkylcarbamate monomers, polymers and blends of the same with crosslinking film making agents and the processes for preparing the same and their use in films deposited on substrates.

EP 0 257 848 A2

# CERTAIN CARBAMATES, PROCESSES FOR PREPARING SAME AND USE THEREOF

## BACKGROUND OF THE INVENTION

This invention is in the field of certain polyurethane polyols and polyurethane group containing polyester and/or polyether resins prepared without the use of any isocyanate intermediates. This invention is also in the field of the process of preparing said polyurethane polyols and/or polyester resins prepared without the use of any isocyanate intermediate. This invention is also in the field of coating compositions containing these polyurethane polyols and/or polyurethane polyether resins with a cross-linking agent such as aminotriazine compounds and resins therefrom such as melamine-formaldehyde reaction products and resins therefrom, urea-formaldehyde resins, epoxy resins, isocyanates or acrylic polymers containing reactive groups, such as hydroxyl groups, carboxyl groups, amide groups, amine groups and the like.

## THE PRIOR ART

The instant applicant is aware of the following references: "The Preparation of Polymeric and Cyclic Urethanes and Ureas from Ethylene Carbonate and Amines," by Elizabeth Dya and Harvey Scott, JACS - (1956) pp 672-675 (U.S.4,268,684), which references disclose the preparation of aromatic carbamates from aromatic amines and cyclic carbonates. Additionally, the "Journal of Elastomers and Plastics, Vol. 14, October 1982, pages 195-203 discloses the preparation of biscarbamates by reaction of diamines with ethylene carbonate followed by catalyzed transesterification with a glycol or a macroglycol. The U.S. Patent 4,284,750, (Amirsakis), shows the preparation of certain glycol derivatives. Each of these citations is incorporated herein by reference.

## DESCRIPTION OF THE INVENTION

This invention relates to certain hydroxyalkyl carbamates of neopentanolamine (3-amino-2, 2-dimethyl - 1 - propanol) and to process of preparing the same. This class of compounds have significant advantages over the preparation of other hydroxyalkyl carbamates such as those prepared from diols, polyester polyols, polyether polyols or other hydroxy functional compounds with a diisocyanate or a polyisocyanate. For one thing, the neopentanolamine based polyurethanes do not crystallize and then precipitate out of solution. Additionally, polyurethanes can be prepared from these hydroxyalkyl carbamates by transesterification. As a consequence, high levels of polyurethane linkages can be incorporated into the structure without loss of solubility. This feature enables the preparation of comparatively low molecular weight polyurethane polyols which do not crystallize. This permits the use of these polyols in high solids coating compositions.

Other hydroxyalkyl carbamates based on other excluded alkanol amines such as ethanolamine or monoisopropanolamine do not have the desired properties of the neopentanolamine carbamates of this invention. These excluded alkanolamine carbamates during the condensation reaction with a diol or a polyester or a polyether do not form polymeric polyurethanes but instead form cyclic urethanes which have an offensive amine-like odor.

It has long been recognized that polyurethanes can be used to produce coatings, films, adhesives, inks and printing pastes with high flexibility, toughness and abrasion resistances.

In the conventional procedure in the preparation of polyurethane polyols there is involved the preparation of a macrodiol or polyol-based on a polyether or polyester resin and further chain extending this diol with a di or polyisocyanate to a polyester or polyether urethane diol or polyol. These functional polyols can be either thermoplastic polymers or they can be cross-linked by a melamine resin or precursor, a polyisocyanate or any other appropriate mechanism.

Additionally, as mentioned briefly above, this invention relates to the method of preparing these polyurethane diols or polyols from certain hydroxyalkyl carbamates and a diol or polyol or ester and to the process for preparing such products. A number of advantages reside in this process, one of which resides in the use of low or non-toxic precursors in the preparation of the polyurethanes. Still further the process permits the preparation of light-stable polyurethanes based on these aliphatic amines. Also, comparatively low molecular weight oligomeric polyurethanes can be prepared which do not crystallize or phase separate.

Among the suitable amino alcohols which may be used to prepare the carbamate precursors of the present invention are those having the formula:

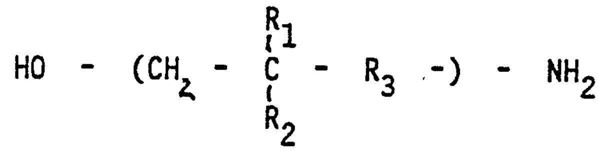

wherein $R_1$ and $R_2$ are separately hydrogen or a $C_1$ to $C_{18}$ alkyl group or a $C_5$ to $C_6$ cycloaliphatic moiety and $R_3$ is $-CH_2$ -or a - O -

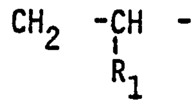

moiety.

These suitable amines include among others 3-amino 1-propanol, 4-amino 1-butanol, 6-amino 1-hexanol, 4-amino 1-hydroxy methyl cyclohexane, 8-amino 1-octanol, 3 (2-hydroxyethoxy) -1-propylamine, 3(2-hydroxy propoxy) -1-propylamine, 2-ethyl-2-hydroxymethyl-1-hexylamine, and the like. The preferred amine used in this invention is neopentanolamine wherein $R_1$ and $R_2$ are each $CH_3$ and $R_3$ is $- CH_2$ -respectively.

In preparing these carbamate precursors, a reaction with the amino alcohols and a selected cyclic carbonates results in the production of hydroxyalkyl carbamates. Suitable cyclic carbonates may be used such as those having the formula:

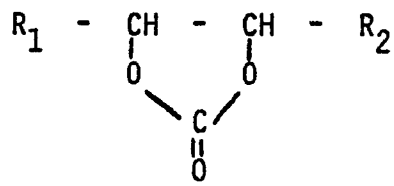

wherein $R_1$ or $R_2$ can be separately either hydrogen or a $C_1$ to $C_{18}$ alkyl group or a phenyl group; $R_2$, alone, can also be $- CH_2 -O - R_1$.

In the preparation of a polyurethane diol or polyol, one may use with the hydroxyalkyl carbamates, polyether diols or polyols derived from ethylene-oxide or propylene-oxide and high -olefin oxides and tetrahydrofuran. These polyols can be di-, tri-or higher functional. The di-and tri-functions polyols are preferred. The higher functional polyols may lead to gelation during the preparation of the polyurethane polyol and for this reason should generally be avoided.

The number average molecular weight of these polyols can be from several repeating polyether units such as about 5 or 10 units to about 40 to 50 units. Generally a number average molecular weight of from about 200 to about 1000 is preferred although molecular weights as low as about 150 and as high as about 5000 can be tolerated.

The polyesters suitable for use in one facet of this invention can be prepared from diols, triols or tetrols esterified with an aliphatic, including cyclo-aliphatic, dicarboxylic acid and/or aromatic di-or tricarboxylic acids or the polyester can be based on a hydroxyalkylcarboxylic acids or the polyester can be based on a hydroxyalkylcarboxylic acid or a lactone and the like.

Among the suitable diols that may be used to prepare the polyesters used with the carbamates of the present invention are ethylene glycol, propylene glycol, 1,3 - butylene glycol, 1,4 - butylene glycol, neopentylglycol, diethylene glycol, dipropylene glycol, cyclohexanedimethanol and the like. Suitable polyols having more than two alcoholic hydroxy groups are trimethylol propane, trimethylol ethane, glycerol, pentaerythritol and the like.

With these polyols one can use such dicarboxylic acids as the $C_3$ to $C_{18}$ aliphatic dicarboxylic acids, either linear or branch-chained namely malonic, succinic, glutaric, adipic, pimelic, suberic, azelaic acids and the like. One can also use the $C_{36}$ dimeric fatty acids for the preparation of the polyester resin. One may also use suitable aromatic dicarboxylic acids such as the o - , m - , or p - , phthalic acids and the available anhydrides thereof, naphthalic, trimellitic anhydride. Unsaturated aliphatic dicarboxylic acids may also be

used including maleic, fumaric, aconitic, itaconic and their anhyrides wherever available and the like. All of these different acids may be used solely or in combination with one another in selected mixtures for particularly desired properties. Still further one may use the alkyl esters and particularly the lower alkyl esters of any of these acids so as to provide a basis for a transesterification reaction. It is preferred to use the methyl esters of these acids principally for cost factors but other lower alkyl esters can be used such as the ethyl, propyl, butyl esters and the like. Even higher alkyl esters can be used but again cost factors generally remove these higher esters from consideration since nothing of value is to be gained by their use. Some mixtures of methyl esters are available commercially and these mixtures are therefore additionally preferred, for this reason. These commercially available mixtures of the methyl esters have a mole ratio of about 0.5 : 1.5 : 0.6, dimethyl adipate, dimethyl glutarate and dimethyl succinate respectively. Variations of this mole ratio can be tolerated depending upon the desired properties of the final polyester resin. Lower viscosities are obtainable with higher levels of glutarate, for example.

The polyesters that are suitable for use with the hydroxyalkyl carbamates of the present invention may have a number average molecular weight varied between about 300 to about 2500.

In order that the concept of the present invention may be more fully understood, the following examples are set forth in which all parts are parts by weight unless otherwise indicated. These examples are set forth primarily for the purpose of illustration and any specific enumeration of detail contained therein should not be interpreted as a limitation on the invention except as is indicated in the appended claims.

## Example 1

Into a suitable reaction vessel equipped with thermometer, stirrer, reflux condensor and inlet and outlet inert gas tubes, there is introduced 114 parts (1. mole) of neopentanolamine (90% in water).

The vessel is heated to about 50° C while blanketing with nitrogen. There is then added slowly 122 parts (1.1 mole) of propylene carbonate to the reactor. The reaction is very exothermic, and cooling is used to keep the reactor content between 90-100° C. The addition time for the propylene carbonate is about 1-3 hours, depending on the rate of cooling.

After 4 hours, holding the reactor at 90-100° C, the mixture is checked for amine content by acid titration. The free amine content should be below about 1% of the reaction mixture. Holding for another 5 hours will reduce the free amine level to about 0.5%. The reaction mixture is then stripped for 2 hours to remove most of the water.

Product Characteristics:

| | |
|---|---|
| Solids content (60°, 110° C) | 80.4% |
| Viscosity Brookfield, mPais, 25° C | 2292 |
| Residual amine content | 0.044 MEQ/q<br>or<br>0.50g/100g |
| Solvent | Propylene Carbonate/Propylene glycol |

For most applications the product can be used as is. Propyleneglycol is formed due to hydrolysis of propylene carbonate in water. Any propylene glycol formation can be eliminated if the neopentanolamine is dried by azeotropic distillation with toluene or xylene before addition of propylene carbonate. Suitable products can be prepared with less excess of propylene carbonate if the reaction time is extended or the reaction temperature is increased. Significantly higher temperatures can lead to the formation of ureas from the reaction of carbamate with free amine which may be undesirable.

Example 2

Into a suitable reaction vessel equipped as in Example 1 there is introduced 10 mol cyclohexane dimethanol (1442 parts) 9 mol of DBE, a dimethyl ester of a dibasic acid blend (16% dimethyl adipate, 61% dimethylglutarate, 23% dimethyl succinate) (1413 parts) are charged. The reaction mixture is heated under inert gas to 120° C, and 1.33 parts of a commercially available tin transesterification catalyst (Fascat 4201, M & T Chemical) is added. The reaction is slowly heated to 165-170° C and about 172 parts of methanol are removed from the reaction mix.

The calculated molecular weight of the polyester diol formed is about 2300 and the hydroxyl number, 49.

To this polyester, 255 parts of reaction product Example 1 are added (1 mol), and the reaction mixture is heated to 160° C and held there for 4 hours. The reaction mixture is then diluted with 200 parts of methoxypropylacetate solvent.

Product Characteristics:

| | |
|---|---|
| Solids, 60′, 110° C, % | 90.7 |
| Viscosity Brookfield in cps. at 25° C | 13400 |
| Appearance | Pale yellow viscous liquid |
| # average MW Calc | 1200 |
| OH Number | 96 |

Example 3

Into a suitable reaction vessel equipped as in Example 1 there is introduced 10 mol of cyclohexanedimethanol (1442 parts), 9 mol of DBE, the dimethyl ester of a dibasic acid blend of Example 2 (1413 parts), 1 mol of Example 1 (255 parts) are charged and 1.33 parts of a tin transesterification catalyst (Fascat 4201, M&T Chemical). The reaction mixture is heated under nitrogen slowly to about 170° C.

At the end of the reaction, vacuum is used to enhance the removal of methanol. The reaction is stopped after 5 hours at 165-170° C. After cooling to 110° C, 100 parts of methoxypropylacetate are charged.

The product has a solids (60′, 110° C) content 91.5% and a viscosity of 6800 cps.

Example 4

Into a suitable reaction vessel equipped as in Example 1 there is introduced 2 mol of cyclohexanedimethanol (288 parts), 2 mol of DBE, the dimethylester of a mixture of dibasic acids (314), 1 mol (255 parts) of reaction product Example 1, and 0.4 part of a tin catalyst (Fascat 4201, M&T Chemical) are charged. The reaction mixture is heated to 165° C under nitrogen and removal of methanol. After most of the methanol has been removed, vacuum is applied, and the residual methanol is removed.

The product has a solids content of 93.7% (60′, 110° C) and a viscosity of 5200 cps. at room temperature. The color of the product is slightly yellow.

Example 5

In situ preparation of neopentanolamine hydroxypropylcarbamate

Into a suitable reaction vessel equipped as in Example 1, there is introduced 288 parts by weight of cyclohexanedimethanol ( 2 mol) and 114.5 parts by weight of a 90% aqueous solution of neopentanolamine (1 mol) are then charged. The reactor is heated to about 105° C, and water is slowly removed. To increase the rate of water removal, 20 parts of toluene are charged. After about 12 parts of water have been distilled out of the reaction mixture, vacuum is applied, and all the remaining toluene is distilled.

The reaction temperature is lowered to 100° C, and 102 parts by weight of propylene carbonate are fed to the reactor. After holding the reactor at 110-115° C for 2-3 hours, the amine content is determined by acid titration. After the free amine content has decreased to less than 3% of the original charge, 314 parts by weight of DBE (2 mol) are charged (dimethyl esters of a blend of aliphatic dicarboxylic acids). The reaction is catalyzed with 0.4 part by weight of a tin transesterification catalyst (Fascat 4201, M&T Chemical). The reaction mixture is heated to 165° C, and the calculated amount of methanol is collected. The final product has a viscosity of 2720 cps at 25° C and a solids content of 93.5%.

Example 6

Water dispersible polyol

Into a suitable reaction vessel equipped as in Example 1, there is introduced 288 parts by weight of cyclohexanedimethanol, 314 parts by weight of DBE, 102 parts by weight of a 80% solution of neopentanolamine hydroxypropyl carbamate, and 0.4 part by weight of a tin catalyst are charged. The reaction mix is heated to 165° C, and about 124 parts by weight of methanol is removed. 200 parts by weight of polyethylene glycol 1000 are charged. The reaction mix is held at 160° C for 5 hours.

The resulting polymer is diluted with 100 parts of methoxypropanol. It has a solids content of 88.6% by weight and is water dispersible.

Example 7

(Comparative Example)

Into a suitable reaction vessel equipped as in Example 1, there is introduced 432.6 parts by weight of cyclohexanedimethanol (10 mol), 424 parts by weight of DBE (9 mol), and 0.6 part of a transesterification catalyst are charged. The reaction mixture is slowly heated to 165° C, and about 170 parts of methanol are collected. To the resulting polyester, 99 parts by weight of bishydroxypropylcarbamate of 1.6-hexanediamine (reaction product of 2 mol of propylene carbonate and hexanediamine) (1 mol) is added. The reaction mixture is held at 165° C for 5 hours to achieve transesterification of the carbamate and the polyester.

After the reaction period, the product is cooled to 130° C and 100 parts by weight of methoxypropylacetate solvent is added. The resulting product has a solids content of 88.7% (60, 100° C) but crystallizes out of the solution on cooling to below 50° C.

Example 8

(Comparative Example)

Into a suitable reaction vessel equipped as in Example 1, there is introduced 489 parts by weight of a hydroxypropylcarbamate of ethanolamine (reaction product of 1 mol ethanolamine with one mol of propylene carbonate) are reacted with 157 parts by weight of DBE. 1.67 parts by weight of the same tin catalyst as before are used.

The reaction is conducted at temperatures of 165-193° C. A very dark colored product is obtained. The indications are that a cyclic carbamate was produced and no polymer.

Example 9

(Comparative Example)

Into a suitable reaction vessel equipped as in Example 1, there is introduced 177 parts by weight of a hydroxypropyl carbamate of monoisopropanolamine, 157 parts by weight DBE, and 0.42 part of a tin transesterification catalyst are heated to 160-165° C. Although methanol is collected, the product produced is predominately a non-polymeric, very odoriferous cyclic carbamate.

Example 10

This example shows the improvement in impact resistance and flexibility using a polyester urethane polyol in a commercially available acrylic automotive top coat.

| | -1 | -2 | -3 |
|---|---|---|---|
| Automotive top coat clear* | 107 | 107 | 107 |
| Polyol Example 2 | | 25 | |
| Polyester** | — | — | 25 |
| Baking Cycle | 30'120° C | 30'120° C | 30'120° C |
| Substrate*** | Bonderite 1000 CRS | Bo 1000CRS | Bo 1000CRS |
| Film thickness, mil | 2-2.5 | 2-2.5 | 2-2.5 |
| Elongation conical mandrel,% | 2 | 20 | 2 |
| Impact resistance, in. lbs, | | | |
| reverse | 4 | 40- 80 | 4 |
| front | 4 | 80-100 | 4 |

*** Iron phosphate pretreated cold rolled steel.

** Commercially available polyester K-Flex 188, OH no.~ 240.

* Commercially available automotive clear coat. Hydroxyl functional acrylic resin cross-linked with a commercially available fully alkylated mixed ether hexa (alkoxymethyl) melamine resin, catalyzed with dodecylbenzene sulfonic acid.

Example 11

Into a suitable mixing vessel, there is introduced, 104.7 parts by weight of the polyester polyol of Example 2 blended wih 6.7 parts by weight of a 75% solution of a commercially available hydroxyl functional acrylic resin (Acryloid AT-400, Rohm & Haas) having an acid no. of about 30 and a hydroxyl no. of about 80, 17.5 parts by weight of hexamethoxymethyl melamine, 0.59 part of dodecylbenzenesulfonic acid and diisopropanolamine salt (DDBSA-DIPOA), 10 parts by weight of n-butanol, and 0.35 part by weight of a fluorocarbon surfactant flow control agent. The clear coating has a measured solids of 83.4% (60' 110° C) and a viscosity of 1160 cps. at 25° C. Films are drawn down on iron phosphate pretreated steel, cured 20 min at 120° C, and give a pencil hardness of HB-F and an impact resistance of > 160 in. lb. on front and reverse.

Example 12

The polyester urethane of Example 2 is combined with a partially methylated high NH (partially methyolated) melamine resin in the stated parts by weight.

| | -1 | -2 | -3 |
|---|---|---|---|
| Polyol example 2 | 104.7 | 104.7 | 104.7 |
| Cymel 325* American Cyanamid Company) | 32.1 | 42.3 | 52.5 |
| Catalyst (DDBSA-DIPOA salt,** 25° C) | 2.5 | 2.7 | 2.8 |
| n-Butanol | 10 | 10 | 10 |
| Fluorocarbon surfactant | .38 | .40 | .43 |
| Acrylic resin (AT-400) | 6.7 | 6.7 | 6.7 |
| Actual solids, %, 60' 100° C | 81.9 | 80.5 | 81.2 |
| Calculated solids content, % | 80.8 | 80.7 | 80.6 |
| Viscosity, cps. at 25° C | 2288 | 2600 | 2725 |
| Baking schedule 10' at 125° C | | | |
| Substrate Bonderite 1000 cold rolled steel | | | |
| Pencil hardness | HB-F | F-H | H-2H |
| Impact resistance reverse, in. x lbs. | 160 | 160 | 160 |
| front, in. x lbs. | 160 | 160 | 160 |
| Cross-Hatch adhesion, % | 100 | 100 | 100 |

* Melamine Resin

** (DDBSA-DIPOA salt, King Industries, Inc.)

Example 13

Into a suitable reaction vessel equipped as in Example 1 there is introduced 75 parts by weight (1 mol) of 3-amino-1-propanol which is heated under nitrogen to 80° C. 122 parts by weight (1.2 mol) of propylene carbonate are slowly fed to the reactor. The reaction is maintained at between 80-100° C for 4 hours after all propylene carbonate has been added then cooled to room temperature and held for an additional 16 hours. The final product has a solids content (ASTM method, 60 min. 110° C) of 90.6% (theorectical solids 89.5%) and a viscosity (25° C) of 1240 cps. Free amine content is 0.68%.

Example 14

Into a suitable reaction vessel equipped as in Example 1 there is introduced 432.6 part by weight of cyclohexane dimethanol (3.0 mol) and 424 parts of dimethyl ester blends of example 2 (2.7 mol) which is heated with 0.4 part of a commercially available tin catalyst. At 140° C methanol starts to distill over and it is collected. The reaction mixture is brought to 200° C and held at this temperature until 165-170 parts by weight of methanol have been collected. The reaction mixture is then cooled to 160° C and 60 parts of the compound of Example 13 is added. The transesterification is continued at 160° C for 3 hours and then the reactor is cooled to about 80° C. To the viscous polymer melt 100 parts of 2-methoxypropylacetate solvent are added. The final product has a solids content of (60 min. 110° C) 89.0% and a viscosity of 7200 cps.

Example 15

Into a suitable mixing vessel, there is introduced 106.7 parts by weight of polymer solution of Example 14 is blended with 6.7 parts of a commercially available acrylic resin (Acryloid AT-400 Rohm & Haas) and 26.5 parts of a commercially available hexa(methoxymethyl) melamine resin and 2.5 parts of a dodecylbenzene sulfonicdiisopropanolamine catalyst (King Industries, Inc.) and 10 parts of n-butanol. The blend has a solids content of 83.1% and a viscosity of 1390 cps.

The blend is drawn down on iron phosphated steel panels (Bonderite 1000) and cured 20 minutes at 120° C. The results are shown in the following table.

| | |
|---|---|
| FILM PROPERTIES Film Thickness, mil | 1.1 - 1.15 |
| Pencil Hardness | HB - F |
| Impact, Reverse in. lbs. | 160 |
| Direct in. lbs. | 160 |
| Cross-hatch Adhesion, % | 50 |
| Salt Spray 100 hrs. | 7 mm, corrosion adhesion loss |

In summary and elaboration, the principal products produced by one of the processes of the present invention are the hydroxyalkyl carbamates of certain alkanol amines such as the hydroxyalkyl carbamate of neopentanolamine wherein said neopentanolamine is reacted with propylenecarbonate in a wide range of molar proportions but preferably equimolor proportions. The temperatures used to react the carbamates with the polyether polyol and/or polyester polyol can vary between 90° C and 200° C or the reflux temperature. However, one can use lower temperatures such as 100° C or 120° C but preferably between about 140° C and 170° C and for best results, ordinarily between about 160° C and 165° C.

On the other hand when reacting the hydroxyalkanol amine with the carbonates to produce the carbamates of the present invention one would use temperatures between about 25° C and 150° C and preferably between about 50° C and 120° C.

The reaction time will vary, of course, with the temperature, between about 30 minutes and 8 hours but preferably between about 4 hours and 5 hours. In the preparation of the carbamates when water is present the stripping of the water will take generally about 2 hours to remove the water and to reduce the amine content to a level of about < 0.5%.

The number average molecular weight of the polymers produced in the present invention can be varied between 400 and 10,000 but one may use M.W.'s of between about 250 and 5000 and preferably between 300-2500.

In the process for the preparation of the carbamates of the present intention as well as the other products used herein such as the polyesters, the polyether polyols and the polyurethanes one will ordinarily use a catalytic material in conventional catalytic quantities such as the commercially available tin compounds such as dibutyl tin dilaurate or alkoxides or the zinc or lead salts or titanates such as titanium tetrabutoxide, or manganese compounds such as manganese diacetate. Catalyst levels of from about 0.005 to 1% by weight of the reactants or typical levels of 0.01 to 0.5% on the same basis can be used.

In the stripping step, in the removal of the water, when present, from the carbamate, one may use a temperature of from about 150° C to 225° C at an absolute pressure of from about 0.05 to 200 torr for a period of time from about 10 seconds to 10 minutes. Preferably one could use a temperature from about 160° C and 210° C at an absolute pressure of from about 0.1 to 150 torr for a period of time from about 20 seconds to about 2 minutes.

Although one of the principal uses of the carbamates of the present invention and the blends thereof with polyesters, polyether polyols and polyurethanes is in coating compositions, one may use these carbamates and blends thereof in such areas as adhesives, foams, moldings, elastomers, and laminates with whatever modifications may be required and such further additives as fillers, layers such as paper and the like.

The hydroxyalkyl carbamates of the present invention have the following structured formula:

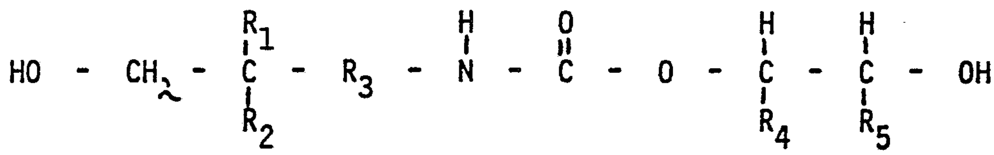

wherein $R_1$ and $R_2$ are separately hydrogen, or a $C_1$ -$C_{18}$ alkyl group, or a $C_5$ or $C_6$ cyclo-aliphatic moiety;

$R_4$ and $R_5$ are separately hydrogen or a $C_1$ -$C_{18}$ alkyl group, or a phenyl group or a -$CH_2$-O-$R_1$ moiety, and $R_3$ is a

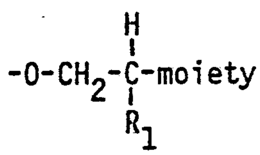

or

separately a $C_1$ to $C_{10}$ linear or branched chain or cyclo-aliphatic alkylene moiety or a -O-$CH_2$-$CH_2$-$CH_2$- moiety.

## Claims

1. A hydroxyalkyl carbamate compound having the following structural formula:

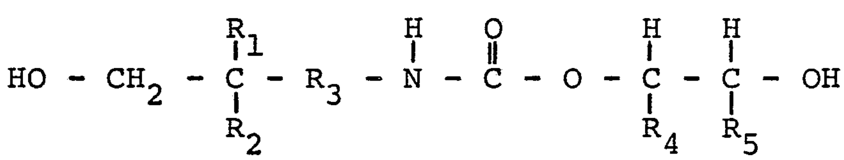

wherein $R_1$ and $R_2$ are separately a hydrogen or a $C_1$-$C_{18}$ alkyl group, or a $C_5$ or $C_6$ cyclo-aliphatic moiety; $R_4$ and $R_5$ are separately hydrogen or a $C_1$ to $C_{18}$ alkyl group, or a phenyl group, or a -$CH_2$-O$R_1$ moiety; $R_3$ is a

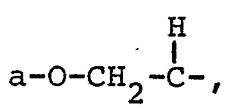

or separately a $C_1$ to $C_{10}$ linear or branched chain or cyclo-aliphatic alkylene moiety, or a-O-$CH_2$-$CH_2$-$CH_2$- moiety.

2. A polymer of the compound of Claim 1 reacted with a linear or branched polyether or polyester-based polyol.

3. A polymer of the compound of Claim 1 reacted with a dimethyl ester of a dicarboxylic acid said polymer having terminal hydroxyl groups.

4. A polymer of the compound of Claim 1 reacted with a different hydroxyalkyl carbamate.

5. A blend of the polymer of Claim 2 with, as a cross-linking agent, a methylol polyamine or a polyisocyanate compound.

6. A blend of the polymer of Claim 2 with a polyisocyanate and/or a blocked polyisocyanate, as a cross-linking agent.

7. A blend of the polymer of Claim 2 with an alkylated polymethylol melamine, as a cross-linking agent.

8. A blend of a polymer of Claim 4 containing a methylol polyamine, as a cross-linking agent.

9. A blend of a polymer of Claim 4 containing a polyisocyanate, as a cross-linking agent.

10. The blend according to Claim 8 in which the cross-linking agent is hexakismethoxymethyl melamine.

11. A process for producing an alkanolamine hydroxylalkyl carbamate comprising reacting an alkolamine with a cyclic carbonate in at least equimolar amounts or an excess of carbonate at a temperature between about 25°C and 200°C until the free amine content is below about 1% by weight of the reaction mixture and stripping the reaction mixture until substantially all of the carbonate is removed.

12. The process according to Claim 12 in which the amine is 3-amino-2,2-dimethyl-1-propanol and the carbonate is propylene carbonate.

13. A coating composition containing the blend of any one of Claims 5-9.

14. A coating composition comprising the hydroxyalkyl carbamate compound of Claim 1 in monomeric and/or polymeric form.